# EUROPEAN PATENT SPECIFICATION

(11) **EP 3 053 447 B1**
(45) Date of publication and mention of the grant of the patent: **30.01.2019**
(21) Application number: 15154137.2
(22) Date of filing: 06.02.2015
(51) Int. Cl.: A23C 19/05, A23C 19/076, A23C 19/028

(54) **Method for preparing cottage cheese**
Verfahren zur Herstellung von körnigen Frischkäse
Procédé de préparation de fromage de cottage

(43) Date of publication of application: 10.08.2016
(73) Proprietor: Tine SA, 0187 Oslo (NO)
(72) Inventor: Hoffmann, Tom, 1550 HØLEN (NO)
(74) Representative: Onsagers AS

(56) References cited:
- WO-A1-99/53773
- FR-A1- 2 069 930
- FR-A1- 2 429 562
- SU-A1- 1 472 032
- US-A- 4 518 616
- US-A1- 2012 219 665

## Description

### Field of the invention

The present invention relates to a method of preparing cottage cheese wherein the amount of acid whey as a by-product is reduced and the production time in the cheese vat is reduced.

### Background of the invention

In production of cottage cheese coagulation of milk proteins is achieved by fermentation of lactose to the isoelectric point of casein. A small amount of rennet may be added to give extra firmness to the coagulated milk. A by-product of the process is whey that is acidic. Said sour/acid whey is roughly as acidic as orange juice and contains mostly lactose and lactic acid, but also some minerals and a small amount of protein.

The large amounts of acid whey caused by the production of cottage cheese are of low value and thus a challenge to the producers. Acid whey cannot simply be dumped as it is toxic to the natural environment. If it reaches waterways, it has the potential to deplete water oxygen levels and kill fish. The acid whey would have to be cleaned by costly processes or be disposed as waste, or may in some degree be mixed into feed or fertilizer, or be used in production of bioethanol.

In contrast, sweet whey which is a by-product from production of hard or rennet cheeses, has a much wider application than acid whey, in that it is used in various products such as protein supplements and food ingredients.

Cottage cheese is produced from sour milk prepared by use of a bacterial culture, i.e. fermentation. The production time is determined by the time sufficient to obtain proper acidification.

SU 1472032 A1 discloses a method for preparing curd wherein a mixture of skimmed milk, whey, citric acid and NaOH is pasteurized and thereafter subjected to ultrafiltration in three stages wherein the fractions obtained in the two first UF stages are diluted with water. The final concentrate is cooled, acidified under presence of yeast and bacterial cultures.

WO 99/53773 discloses a method for production of fresh cheese, comprising the steps of pretreating milk and concentrating it by membrane filtration, and also heat treating the milk concentrate, characterized in that coagulation agent and flavour additives are thereafter added to the concentrated milk, whereafter the mixture is packed directly in consumer packages.

Now, it is surprisingly found that by recirculating by-product acid whey into concentrated milk for cottage cheese, the amount of acid whey to be discharged and the production time are considerably reduced compared to known methods.

### Summary of the invention

It is a main object of the present invention to provide a method for making cottage cheese, wherein the amount of the by-product acid whey is considerably reduced and at the same time the production time is considerably reduced.

This and other objects are obtained by the method as defined in the accompanying claims.

### Detailed description of the drawings

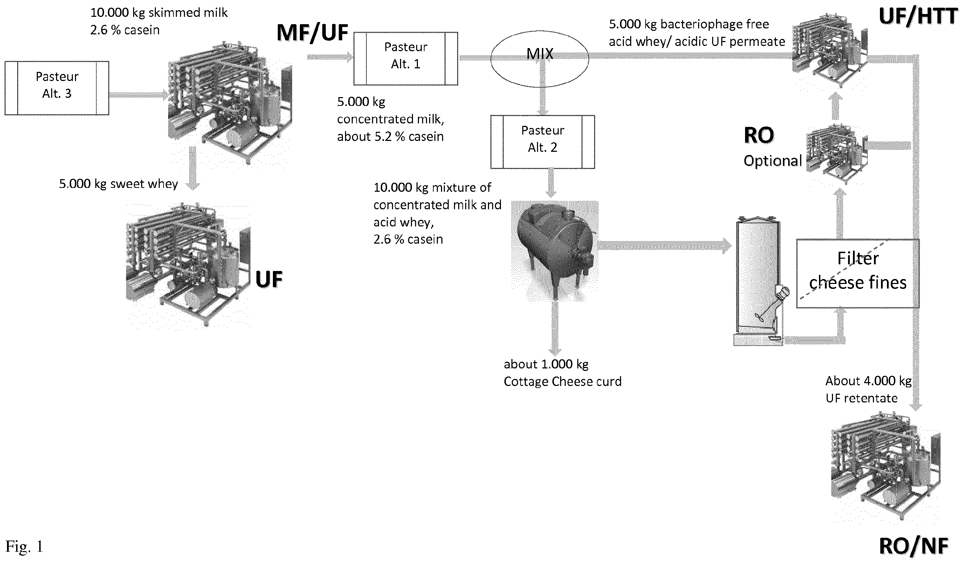

Fig. 1 illustrates the method of preparing cottage cheese according to the present invention. The amounts and concentration factor may vary.

### Detailed description of the invention

The present invention provides a method of producing cottage cheese comprising the steps of:
a) providing skimmed milk;
b) concentrating the protein content of the milk of step a) by removal of sweet whey by means of microfiltration (MF), ultra filtration (UF) or any combination of MF and UF;
c) providing acid whey or acidic UF permeate;
d) subjecting the acid whey of step c) to a treatment selected form UF, heat treatment or any combination to enable reduction of bacteriophages;
e) mixing the milk concentrate obtained in step b) with the acid whey or acidic UF permeate obtained in step d);
f) transferring the mixture obtained in step e) to a cheese vat wherein a bacterial culture and optionally rennet are added, followed by stirring and cutting to produce cottage cheese curd and acid whey which is drained off;
g) recirculating all of or a part of the acid whey obtained in step f) to the UF and/or heat treatment in step d); and
h) treating the curd obtained in step f) in a conventional manner to obtain cottage cheese.

As defined herein milk is any type of milk produced by any milk animals. Most common milk animals are cattle or cows, buffaloes, goats, sheep and camels. Less common milk animals, but included herein, are yaks, horses, reindeers and donkeys.

The major proteins in milk are casein and whey proteins. In milk from cattle the ratio of casein to whey proteins is typically 80 to 20.

The milk, the milk concentrate or the mixture of milk concentrate and acid whey of the method according to the present invention is subjected to pasteurisation.

According to one embodiment of the invention, the milk provided in step a) of the method is pasteurised.

According to another embodiment of the invention, the concentrated milk obtained in step b) is subjected to pasteurisation before mixing with the acid whey.

According to yet another embodiment of the invention, the mixture of concentrated milk and acid whey or acidic UF permeate obtained according to step e) is subjected to pasteurisation before entering the cheese vat.

The microfiltration (MF) of milk in step b) of the presently invented method is carried out by using membranes with pore size from 0.05 µm to 0.2 µm. The ultrafiltration (UF) of milk in step b) of the method is carried out by using membranes with pore size from 1 kDa to 500 kDa. Any combinations of MF and UF using membranes with pore sizes as mentioned above may be used in order to concentrate the milk as indicated in step b) of the invented method.

The sweet whey removed in step b) of the method may be subjected to further ultrafiltration (UF) before final treatment and application as for instance protein supplements and food ingredients.

According to one embodiment of the present invention, the protein content of the milk concentrate obtained in step b) is in the range from 4 % to 12 %.

According to a preferred embodiment of the present invention, the protein content of the milk concentrate obtained in step b) is in the range from 5 % to 11 %.

According to another preferred embodiment of the present invention, the protein content of the milk concentrate obtained in step b) is in the range from 6 % to 10 %.

In one aspect of the present invention, the acid whey provided in step c) is a by-product from production of cottage cheese, e.g. the production of cottage cheese curd in step f) of the present method.

In another aspect of the invention, the acid whey provided in step c) is a by-product from production of other sour dairy products, e.g. the production of concentrated fermented milk products, cream cheeses, skyr and quark.

In order to enable use of acid whey in step e) of the present invention, removal of bacteriophages to an acceptable level is required. This can be done by subjecting the acid whey to an appropriate treatment before mixing with the milk concentrate. That is, the acid whey is subjected to a treatment which enables a reduction of bacteriophages of ≥ log 7, preferably ≥ log 9.

Alternative treatments of acid whey are ultrafiltration (UF), heat treatment and any other treatment resulting in reduction of bacteriophages to an acceptable level. Any combination of the said treatments is included in the group of alternative treatments within the scope of the present invention.

The ultrafiltration (UF) of acid whey is carried out by using membranes with pore size from 1 kDa to 500 kDa, preferably from 20 kDa to 300 kDa.

In the case wherein heat treatment is used, it is carried out at temperatures from 70 °C to 100 °C in a period of time from 1 second to 20 minutes provided that the lowest temperature requires the longest period of time and vice versa. According to one embodiment, the heat treatment is carried out at a temperature of 100 or 90 °C for 1 second. According to another embodiment, the heat treatment is carried out at a temperature of 70 °C for 20 minutes. The heat treatment used in the present method is also referred to as high temperature treatment (HTT).

The bacterial culture added in step f) to provide fermentation, is a starter culture of lactic acid bacteria.

The bacterial culture used in step d) is a starter culture typically comprising *Lactococcus lactis* subsp. *cremoris* and/or *Lactococcus lactis* subsp. *lactis.* The bacterium *Lactococcus lactis* can be used in single strain starter cultures, or in mixed strain cultures with other lactic acid bacteria such as *Lactobacillus* and *Streptococcus.*

In one aspect of the present invention, rennet is added in step f) of the method. The rennet, typically calf rennet, is added to give the curd product extra firmness when cut.

The bacterial culture and rennet are added in conventional amounts.

The fermentation in step f) is carried out in a time sufficient to obtain proper acidification. That is, target pH is in the range from 4.2 to 5.0, preferably in the range from 4.5 to 4.6.

An appropriate amount of acid whey having an acceptable level of bacteriophages is mixed with concentrated milk and added together with a bacterial culture and optionally rennet to the cheese vat. The addition of acid whey contributes to fulfilling the acidification of the milk concentrate in less time than by using culture alone. In this way the production time of the method according to the invention is reduced compared to traditional methods. If desired, the acidity of the acid whey can be increased by concentrating the acid whey by for instance reverse osmosis (RO). Consequently, the fermentation time is further reduced.

Stirring and cutting according to conventional cottage cheese production are carried out during step f) of the present invention in order to produce curds. The acid whey expelled during the production of curds are drained off from the cheese vat and recirculated to the UF and/or heat treatment in step d).

In one aspect of the invention all of the acid whey drained off from the cheese vat is recirculated to UF in step d) to produce a permeate and a retentate. All or a part of the permeate is then mixed with the concentrated milk in step e), and the retentate is subjected to RO or nanofiltration (NF) and discharged.

In another aspect of the invention, a part of the acid whey drained off from the cheese vat is recirculated to heat treatment in step d) before it is mixed with the concentrated milk in step e). The remaining part of acid whey obtained in step f) is discharged, optionally after having been subjected to RO or NF.

In step h) of the invented method, the curd product obtained in step f) is treated according to a conventional manner to obtain cottage cheese. That is, the curd product is subjected to washing to achieve cooling and removing of lactic acid and remaining lactose. Furthermore, a dressing of pasteurised cream and salt may be added to the curd product, as well as herbs and other flavouring agents. Whey protein concentrates or powders may be added to increase the protein content in the dressing.

In one aspect of the present invention, the ratio of milk provided in step a) to UF retentate and/or surplus acid whey to be discharged obtained in step d) by subjecting the acid whey to UF or heat treatment, respectively, is in the range from 10:2 to 10:8. In another aspect of the present invention, the ratio of milk provided in step a) to UF retentate or surplus acid whey to be discharged obtained in step d) is in the range from 10:3 to 10:5. In still another aspect of the present invention, the ratio of milk provided in step a) to UF retenate or surplus acid whey obtained in step d) is about 10:4.

In one aspect of the present invention, a method for making cottage cheese, wherein the amount of the by-product acid whey is reduced by 60 % compared to known methods, is provided. According to another aspect, the method of the present invention provides 55 % reduction of acid whey compared to known methods. According to still another aspect, the method of the present invention provides 50 % reduction of acid whey compared to known methods. According to yet another aspect, the method of the present invention provides 50 % to 20 % reduction of acid whey compared to known methods.

The invention is explained in more detail in the examples below.

### Examples

### Example 1

Skimmed milk (10.000 kg) having a casein content of 2.6 % is provided and the casein content of the milk is concentrated to about 5.2 % by removal of 5.000 kg sweet whey (MF permeate) by use of MF. The concentrated milk (5.000 kg) is mixed with acid whey or acidic UF permeate (5.000 kg) recirculated from the cheese vat and then subjected to UF and/or heat treatment to reduce the amount of bacteriophages. The mixture obtained (10.000 kg) having a casein content of 2.6 % is fed into a cheese vat together with a bacterial culture and optionally rennet. Fermentation, stirring and cutting are performed in order to produce curds and acid whey. The acid whey (9.000 kg) is drained off and recirculated into the process by subjecting it to e.g. UF wherein a UF permeate (5.000 kg) and a UF retentate (4.000 kg) is produced. The UF permeate is recirculated into the mixing with the concentrated milk, while the UF retentate is discharged optionally after further concentration by RO or NF. The curd product is treated in a conventional manner to obtain cottage cheese (1.000 kg).

This process is visualised in Fig. 1.

### Example 2

Skimmed milk (10.000 kg) having a protein content of 3.4 % is provided and the protein content of the milk is concentrated to about 6.8 % by removal of 5.000 kg sweet whey UF permeate by use of UF. The concentrated milk (5.000 kg) is mixed with acid whey or acidic UF permeate (5.000 kg) recirculated from the cheese vat and then subjected to UF and/or heat treatment to reduce the amount of bacteriophages. The mixture obtained (10.000 kg) having a protein content of 3.4 % is fed into a cheese vat together with a bacterial culture and optionally rennet. Fermentation, stirring and cutting are performed in order to produce curds and acid whey. The acid whey (9.000 kg) is drained off and recirculated into the process by subjecting it to e.g. UF wherein a UF permeate (5.000 kg) and a UF retentate (4.000 kg) is produced. The UF permeate is recirculated into the mixing with the concentrated milk, while the UF retentate is discharged optionally after further concentration by RO or NF. The curd product is treated in a conventional manner to obtain cottage cheese (1.000 kg).

Compared to traditional methods of producing cottage cheese, the present method according to the examples above, result in about 56 % reduction of waste acid whey.

## Claims

1. A method of producing cottage cheese comprising the steps of:
a) providing skimmed milk;
b) concentrating the protein content of the milk of step a) by removal of sweet whey by means of microfiltration (MF), ultra filtration (UF) or any combination of MF and UF;
c) providing acid whey or acidic UF permeate;
d) subjecting the acid whey of step c) to a treatment selected form UF, heat treatment or any combination to enable reduction of bacteriophages;
e) mixing the milk concentrate obtained in step b) with the acid whey or acidic UF permeate obtained in step d);
f) transferring the mixture obtained in step e) to a cheese vat wherein a bacterial culture and optionally rennet are added, followed by stirring and cutting to produce cottage cheese curd and acid whey which is drained off;
g) recirculating all of or a part of the acid whey obtained in step f) to the UF and/or heat treatment in step d); and
h) treating the curd obtained in step f) in a conventional manner to obtain cottage cheese.

2. The method of claim 1, further comprising pasteurisation of the milk provided in step a), the milk concentrate obtained in step b), or the mixture of milk concentrate and acid whey or acidic UF permeate obtained in step e).

3. The method of claim 1, wherein the MF and/or UF in step b) is carried out by using membranes with pore size from 0.05 µm to 0.2 µm in the case of MF and with pore size from 1 kDa to 500 kDa in the case of UF.

4. The method of claim 1, wherein the protein content of the milk concentrate obtained in step b) is in the range from 4 % to 12 %, preferably from 5 % to 11 %, and more preferably from 6 % to 10 %.

5. The method of claim 1, wherein the acid whey in step c) is a by-product from production of cottage cheese curd.

6. The method of claim 1, wherein the treatment of the acid whey in step d) enables a reduction of bacteriophages of ≥ log 7, preferably ≥ log 9.

7. The method of claim 1, wherein the UF of the acid whey in step d) is carried out by using membranes with pore size from 1 kDa to 500 kDa, preferably from 20 kDa to 300 kDa.

8. The method of claim 1, wherein the heat treatment of the acid whey in step d) is carried out at temperatures from 70 °C to 100 °C in a period of time from 1 second to 20 minutes provided that the lowest temperature requires the longest period of time and vice versa.

9. The method of claim 1, wherein the ratio of milk provided in step a) to UF retentate and/or surplus acid whey to be discharged obtained in step d) by subjecting the acid whey to UF or heat treatment, respectively, is in the range from 10:2 to 10:8.

10. The method of claim 9, wherein the ratio is in the range from 10:3 to 10:5, e.g. about 10:4.

11. The method of claim 1, wherein the mixture obtained in step e) has an optimal content of protein for production of cottage cheese, wherein the protein content of the mixture is in the range from 2.5 % to 8 %.

12. The method of claim 1, wherein the mixture obtained in step e) has a pH of from 5.0 to 6.5.

13. The method of claim 1, wherein the bacterial culture in step f) is a starter culture of lactic acid bacteria.

14. The method of claim 1, wherein the fermentation caused by addition of the bacterial culture in step f) is carried out in a time sufficient to obtain a pH in the range from 4.2 to 5.0, preferably in the range from 4.5 to 4.6.

## Patentansprüche

1. Verfahren zum Herstellen von Hüttenkäse, die folgenden Schritte umfassend:
a) Bereitstellen entrahmter Milch;
b) Konzentrieren des Proteingehalts der Milch von Schritt a), indem Süßmolke mittels Mikrofiltration (MF), Ultrafiltration (UF) oder irgendeiner Kombination aus MF und UF entfernt wird;
c) Bereitstellen von Sauermolke oder saurem UF-Permeat;
d) Aussetzen der Sauermolke von Schritt c) einer Behandlung, die aus UF, Wärmebehandlung oder irgendeiner Kombination ausgewählt ist, um eine Reduktion von Bakteriophagen zu ermöglichen;
e) Mischen des im Schritt b) erhaltenen Milchkonzentrats mit der Sauermolke oder dem sauren UF-Permeat, die bzw. das im Schritt d) erhalten wurde;
f) Überführen des im Schritt e) erhaltenen Gemischs in einen Käsekessel, wobei eine Bakterienkultur und optional Lab zugesetzt werden, gefolgt von Rühren und Zerteilen, um Hüttenkäsebruch und Sauermolke herzustellen, die ausgeleitet wird;
g) Wiederzuführen der gesamten oder eines Teils der in Schritt f) erhaltenen Sauermolke zu der UF- und/oder Wärmebehandlung im Schritt d); und
h) Behandeln des im Schritt f) erhaltenen Bruchs auf eine herkömmliche Weise, um Hüttenkäse zu erhalten.

2. Verfahren nach Anspruch 1, darüber hinaus eine Pasteurisierung der im Schritt a) bereitgestellten Milch, des im Schritt b) erhaltenen Milchkonzentrats oder des im Schritt e) erhaltenen Gemischs aus Milchkonzentrat und Sauermolke oder saurem UF-Permeat umfassend.

3. Verfahren nach Anspruch 1, wobei die MF und/oder UF im Schritt b) unter Verwendung von Membranen im Falle von MF mit einer Porengröße von 0,05 µm bis 0,2 µm und im Falle von UF mit einer Porengröße von 1 kDa bis 500 kDa erfolgt.

4. Verfahren nach Anspruch 1, wobei der Proteingehalt des im Schritt b) erhaltenen Milchkonzentrats im Bereich von 4 % bis 12 %, vorzugsweise von 5 % bis 11 % und bevorzugter von 6 % bis 10 % liegt.

5. Verfahren nach Anspruch 1, wobei die Sauermolke im Schritt c) ein Nebenprodukt aus der Herstellung von Hüttenkäsebruch ist.

6. Verfahren nach Anspruch 1, wobei die Behandlung der Sauermolke im Schritt d) eine Reduktion von Bakteriophagen von ≥ log 7, vorzugsweise ≥ log 9 ermöglicht.

7. Verfahren nach Anspruch 1, wobei die UF der Sauermolke im Schritt d) unter Verwendung von Membranen mit einer Porengröße von 1 kDa bis 500 kDa, vorzugsweise von 20 kDa bis 300 kDa erfolgt.

8. Verfahren nach Anspruch 1, wobei die Wärmebehandlung der Sauermolke im Schritt d) bei Temperaturen von 70°C bis 100°C in einem Zeitraum von 1 Sekunde bis 20 Minuten erfolgt, vorausgesetzt, dass die niedrigste Temperatur den längsten Zeitraum benötigt und umgekehrt.

9. Verfahren nach Anspruch 1, wobei das Verhältnis von im Schritt a) bereitgestellter Milch zu UF-Retentat und/oder überschüssiger auszuleitender Sauermolke, die im Schritt d) erhalten wurde, indem die Sauermolke einer UF- oder Wärmebehandlung unterzogen wurde, jeweils im Bereich von 10:2 bis 10:8 liegt.

10. Verfahren nach Anspruch 9, wobei das Verhältnis im Bereich von 10:3 bis 10:5, z.B. bei ca. 10:4 liegt.

11. Verfahren nach Anspruch 1, wobei das im Schritt e) erhaltene Gemisch einen optimalen Proteingehalt zur Herstellung von Hüttenkäse hat, wobei der Proteingehalt des Gemischs im Bereich von 2,5 % bis 8 % liegt.

12. Verfahren nach Anspruch 1, wobei das das im Schritt e) erhaltene Gemisch einen pH-Wert von 5,0 bis 6,5 hat.

13. Verfahren nach Anspruch 1, wobei es sich bei der Bakterienkultur im Schritt f) um eine Milchsäurebakterien-Starterkultur handelt.

14. Verfahren nach Anspruch 1, wobei die durch den Zusatz der Bakterienkultur im Schritt f) bewirkte Fermentation in einer Zeit erfolgt, die ausreicht, um einen pH-Wert im Bereich von 4,2 bis 5,0, vorzugsweise im Bereich von 4,5 bis 4,6 zu erzielen.

## Revendications

1. Procédé de production de fromage frais cottage, comprenant les étapes consistant :
a) à fournir un lait écrémé ;
b) à concentrer la teneur protéique du lait de l'étape a) en enlevant le lactosérum doux au moyen d'une microfiltration (MF), d'une ultrafiltration (UF) ou de toute combinaison de MF et de UF ;
c) à fournir un lactosérum acide ou un perméat d'UF acide ;
d) à soumettre le lactosérum acide de l'étape c) à un traitement choisi parmi UF, un traitement thermique ou toute combinaison pour permettre la réduction des bactériophages ;
e) à mélanger le concentré de lait obtenu dans l'étape b) avec le lactosérum acide ou le perméat d'UF acide obtenu dans l'étape d) ;
f) à transférer le mélange obtenu dans l'étape e) dans une cuve à fromage dans laquelle une culture bactérienne et facultativement de la présure sont ajoutées, puis à agiter et couper pour produire des grains de fromage cottage et du lactosérum acide qui est égoutté ;
g) à faire recirculer tout ou partie du lactosérum acide obtenu dans l'étape f) à l'UF et/ou au traitement thermique dans l'étape d) ; et
h) à traiter les grains obtenus dans l'étape f) d'une manière conventionnelle pour obtenir du fromage cottage.

2. Procédé selon la revendication 1, comprenant en outre la pasteurisation du lait fourni dans l'étape a), du concentré de lait obtenu dans l'étape b) ou du mélange de concentré de lait et de lactosérum acide ou de perméat d'UF acide obtenu dans l'étape e).

3. Procédé selon la revendication 1, dans lequel la MF et/ou l'UF dans l'étape b) est mise en oeuvre en utilisant des membranes ayant une taille de pores de 0,05 µm à 0,2 µm dans le cas de la MF et ayant une taille de pores de 1 kDa à 500 kDa dans le cas de l'UF.

4. Procédé selon la revendication 1, dans lequel la teneur protéique du concentré de lait obtenu dans l'étape b) est dans la gamme de 4 % à 12 %, de préférence de 5 % à 11 %, et de préférence encore de 6 % à 10 %.

5. Procédé selon la revendication 1, dans lequel le lactosérum acide dans l'étape c) est un sous-produit de la production de grains de fromage cottage.

6. Procédé selon la revendication 1, dans lequel le traitement du lactosérum acide dans l'étape d) permet une réduction des bactériophages de ≥ log 7, de préférence ≥ log 9.

7. Procédé selon la revendication 1, dans lequel l'UF du lactosérum acide dans l'étape d) est mise en oeuvre en utilisant des membranes ayant une taille de pores de 1 kDa à 500 kDa, de préférence de 20 kDa à 300 kDa.

8. Procédé selon la revendication 1, dans lequel le traitement thermique du lactosérum acide dans l'étape d) est mis en oeuvre à une température de 70 °C à 100 °C dans une période de temps de 1 seconde à 20 minutes, étant entendu que la température la plus basse requiert la période de temps la plus longue et *vice versa.*

9. Procédé selon la revendication 1, dans lequel le rapport du lait fourni dans l'étape a) au rétentat d'UF et/ou au lactosérum acide en surplus devant être rejeté obtenu dans l'étape d) en soumettant le lactosérum acide à une UF ou un traitement thermique, respectivement, est dans la gamme de 10:2 à 10:8.

10. Procédé selon la revendication 9, dans lequel le rapport est dans la gamme de 10:3 à 10:5, par exemple environ 10:4.

11. Procédé selon la revendication 1, dans lequel le mélange obtenu dans l'étape e) a une teneur optimale en protéines pour la production de fromage cottage, laquelle teneur en protéine du mélange est dans la gamme de 2,5 % à 8 %.

12. Procédé selon la revendication 1, dans lequel le mélange obtenu dans l'étape e) a un pH de 5,0 à 6,5.

13. Procédé selon la revendication 1, dans lequel la culture bactérienne dans l'étape f) est une culture de démarrage de bactéries d'acide lactique.

14. Procédé selon la revendication 1, dans lequel la fermentation provoquée par l'addition de la culture bactérienne dans l'étape f) est mise en oeuvre sur une durée suffisante pour obtenir un pH dans la gamme de 4,2 à 5,0, de préférence dans la gamme de 4,5 à 4,6.
